# EUROPÄISCHE PATENTSCHRIFT

(11) **EP 3 033 196 B1**
(45) Veröffentlichungstag und Bekanntmachung des Hinweises auf die Patenterteilung: **22.01.2020**
(21) Anmeldenummer: 13789699.9
(22) Anmeldetag: 01.11.2013
(51) Int. Cl.: B23F 21/03, B23F 19/05

(54) **MASCHINE ZUR BEARBEITUNG VON WERKSTÜCKEN**
MACHINE FOR MACHINING WORKPIECES
MACHINE PERMETTANT D'USINER DES PIÈCES

(30) Priorität: 12.08.2013 CH 13792013
(43) Veröffentlichungstag der Anmeldung: 22.06.2016
(73) Patentinhaber: Gleason Switzerland AG, 2557 Studen (CH)
(72) Erfinder: BRANDSBERG, Frederik, CH-8055 rich (CH); BERNHARDSGRÜTTER, Urs, CH-8332 Russikon (CH)
(74) Vertreter: Leinweber & Zimmermann
(86) Internationale Anmeldenummer: PCT/CH2013/000190
(87) Internationale Veröffentlichungsnummer: WO 2015/021565

(56) Entgegenhaltungen:
- EP-B1- 1 319 458
- DE-A1- 2 719 524
- DE-A1-102010 024 366
- DE-U1- 9 300 936
- JP-A- H06 190 631
- JP-A- H07 237 036

## Beschreibung

### Technisches Gebiet

Die Erfindung betrifft eine Maschine zur Bearbeitung von Werkstücken, namentlich zur Herstellung eines Honrings und zum Honen von Werkstücken. Die Erfindung betrifft weiter ein Verfahren zum Zahnradhonen.

### Stand der Technik

Maschinen und Verfahren zum Zahnradhonen sind bekannt. Bei der Fertigung von aussen verzahnten Zahnrädern wälzt sich nach der Grundprofilierung des Werkstücks ein Honring unter versetzten Achsen mit dem zu bearbeitenden Werkstück ab. Beim Honen von innen verzahnten Zahnrädern kommt analog dazu ein abrasives Zahnrad mit Aussenverzahnung zum Einsatz. Derartige Honmaschinen werden u. a. für die Massenfertigung von Zahnrädern für Antriebskomponenten von Fahrzeugen wie z. B. Personen- und Lastwagen eingesetzt. Gegenüber geschliffenen Zahnrädern zeichnen sich gehonte Zahnräder durch ihr vorteilhaftes Geräuschverhalten und geringen Verschleiss aus. Beim Honen werden tiefe Schnittgeschwindigkeiten eingesetzt, wodurch die thermische Belastung des Werkstücks gering gehalten werden kann.

Die Fertigung des Honrings bzw. des Honzahnrads ist anspruchsvoll. Dazu wird herkömmlicherweise ein Rohling aus einem pulverförmigen Gemisch aus Schneidstoff, Bindemittel und Hilfsstoffen gepresst und in einem Ofen ausgehärtet. Die Verzahnung kann im Rahmen des Pressvorgangs ebenfalls bereits ausgebildet werden. Anschliessend werden die Flanken des Rohlings mit speziell angefertigten Diamantzahnrädern profiliert. Für die Herstellung des Honrings und das anschliessende Honen werden unterschiedliche Maschinen benutzt, wodurch eine grosse Stellfläche notwendig wird und hohe Investitionskosten anfallen.

Die EP 1 319 458 B1 (The Gleason Works) betrifft ein Verfahren zur Herstellung eines innenverzahnten Honrings auf einer Honmaschine mit einer Werkzeugspindel und einer Werkstückspindel, deren Achsen sich kreuzen und die mit eigenen Antrieben antreibbar sind. Dazu wird ein unverzahnter Honringrohling auf die Werkzeugspindel gespannt und mit einem auf der Werkstückspindel gespannten aussenverzahnten Werkzeug in Berührung gebracht, im Synchronlauf mit der Drehbewegung des Werkzeugs angetrieben und dabei radial zugestellt. Beim aussenverzahnten Werkzeug handelt es sich um ein mit Hartstoff, insbesondere Diamant, beschichtetes Zahnrad.

Somit kann auf derselben Maschine der Honring hergestellt und anschliessend gehont werden. Die Herstellung des aussenverzahnten Werkzeugs zur Herstellung des Honrings ist allerdings aufwendig, das Diamantzahnrad entsprechend kostspielig. Für jede Honring-Geometrie wird ein neues derartiges Profilierwerkzeug benötigt. Dies fällt besonders bei kleineren Serien herzustellender Zahnräder ins Gewicht. Ferner wird zur Herstellung des aussenverzahnten Werkzeugs wiederum eine weitere Maschine benötigt.

Der Oberbegriff von Anspruch 1 basiert auf DE 93 00 936U.

DE 102010024366A1 zeigt ein Verfahren zum Zahnradhonen mit den Schritten: Anbringen eines Honringrohlings in einem Honringträger einer Maschine; Herstellen eines Honrings; Anbringen eines zu honenden Zahnradrohlings an einer Werkstückspindel; und Herstellen eines Zahnrads durch Honen des Zahnradrohlings mittels des Honrings.

### Darstellung der Erfindung

Aufgabe der Erfindung ist es, eine dem eingangs genannten technischen Gebiet zugehörende Maschine zur Bearbeitung von Werkstücken sowie ein Verfahren zum Zahnradhonen zu schaffen, welche eine erhöhte Flexibilität bei reduzierten Kosten ermöglichen.

Die Lösung der Aufgabe ist durch die Merkmale des Anspruchs 1 definiert. Gemäss der Erfindung umfasst die Maschine zur Bearbeitung von Werkstücken
a) ein Maschinengestell;
b) einen am Maschinengestell gelagerten Honringträger, in welchen ein Honring oder ein Honring-Rohling einspannbar und um seine zentrale Achse drehend antreibbar ist;
c) ein Werkstückspindelmodul mit einer Werkstückspindel, wobei im Bereich eines freien Endes der Werkstückspindel ein mit dem im Honringträger eingespannten Honring zu bearbeitendes Werkstück anbringbar ist;
d) ein Schleifmodul zur Profilierung eines Honrings durch Schleifen eines Honring-Rohlings, wobei das Schleifmodul derart am Maschinengestell angeordnet ist, dass sich eine Schleifscheibe des Schleifmoduls innerhalb eines echt dreidimensionalen Raumgebiets relativ zum Honringträger positionieren lässt.

Mit der erfindungsgemässen Maschine kann somit sowohl die Herstellung (Profilierung) des Honrings, also die Verzahnung erzeugt, als auch das Honen durchgeführt werden. Zwischen der Herstellung des Honrings und dessen Verwendung im Honverfahren muss er nicht aus dem Honringträger entfernt werden. Die Herstellung (Profilierung) des Honrings und das Honen erfolgen somit in derselben Aufspannung des Honrings. Dadurch werden Probleme, die sich durch eine ungenaue Zentrierung beim (Wieder-)Aufspannen des Honrings ergeben, von vornherein vermieden. Ein honringspezifisches aussenprofiliertes Werkzeug (Diamant-Zahnrad) wird zur Herstellung des Honrings nicht benötigt. Die Profilierung des Honrings erfolgt mittels des Schleifmoduls. Mit demselben Schleifmodul ist es möglich, Honringe verschiedener Geometrie herzustellen.

Die relative Positionierbarkeit der Schleifscheibe bezüglich des Honringträgers innerhalb eines echt dreidimensionalen Raumgebiets kann auf verschiedene Weise realisiert sein. So kann beispielsweise die Schleifscheibe entlang von drei kartesischen Achsen beweglich ausgeführt sein, oder eine oder mehrere dieser Achsen sind Freiheitsgrade des Honringträgers. Ferner können eine oder mehrere der Achsen auch als Schwenkachsen o. ä. ausgebildet sein.

Insbesondere mit der erfindungsgemässen Maschine, aber auch mit anderen Einrichtungen lässt sich ein erfindungsgemässes Verfahren zum Zahnradhonen durchführen, welches folgende Schritte umfasst:
a) Anbringen eines Honring-Rohlings in einem Honringträger einer Maschine;
b) Herstellen eines Honrings durch Schleifen des Honring-Rohlings mit einem Schleifmodul der Maschine;
c) Bringen des Schleifmoduls in eine Ruhestellung und Positionieren eines Werkstückspindelmoduls der Maschine in einer Arbeitsstellung;
d) Anbringen eines zu honenden Zahnradrohlings an einer Werkstückspindel des Werkstückspindelmoduls; und
e) Herstellen eines Zahnrads durch Honen des Zahnradrohlings mittels des Honrings.

Die Herstellung des Honrings durch Schleifen und die Herstellung des Zahnrads durch Honen können somit in derselben Aufspannung des Honrings erfolgen.

Das Schleif- und das Werkstückspindelmodul können gleichzeitig an der Maschine angebracht sein und durch einen Positionswechsel jeweils in die Arbeitsstellung bzw. in die Ruhestellung gebracht werden. Die Module können dazu aber auch gegeneinander ausgetauscht werden.

Mit Vorteil umfasst die Maschine eine am Maschinengestell angeordnete Abrichteinheit zum Abrichten der Schleifscheibe des Schleifmoduls, wobei das Schleifmodul durch Positionieren des Modulträgers zwischen einer Abrichtstellung und einer Schleifstellung verfahrbar ist.

So kann im Rahmen des Verfahrens vor oder während der Herstellung des Honrings eine abrichtbare Schleifscheibe des Schleifmoduls mit einer an der Maschine angeordneten Abrichteinheit abgerichtet werden. Die Schleifscheibe verbleibt somit während des gesamten Prozesses im Schleifmodul, so dass der gesamte Prozess der Profilierung des Zahnradrohlings und des anschliessenden Honens vollautomatisch ablaufen kann. Auch im Rahmen des Honprozesses kann die Schleifscheibe weiterhin zum Nachprofilieren, d. h. zum Schärfen und für geringfügige Formkorrekturen, des Honrings eingesetzt werden. Beispielsweise erfolgt eine Nachprofilierung jeweils nach einer gewissen Anzahl von gehonten Werkstücken.

Während des Profilierens des Honrings, also der Erzeugung der Verzahnung, kann die Schleifscheibe je nach Bedarf mehrfach neu abgerichtet werden. Dabei können stets wieder dieselbe Geometrie und Oberflächenbeschaffenheit erzeugt werden. Es kann aber von Vorteil sein, wenn im Rahmen eines Profilierungsvorgangs verschiedene Oberflächenbeschaffenheiten eingesetzt werden, z. B. eine rauhe Oberfläche für das Schruppen und eine feinere Oberfläche für das Schlichten. Auch die Geometrie kann (leicht) unterschiedlich gewählt werden, z. B. wird zunächst durch Schruppen die Geometrie der Verzahnung grob erzeugt, während nachfolgend durch Schlichten nur noch die eigentlichen Arbeitskonturen bearbeitet werden.

In einer alternativen Ausführungsform ist die Abrichteinheit an einem beweglichen Element der Maschine angeordnet, so dass sich die Abrichteinheit in eine Abrichtstellung relativ zum Schleifmodul verfahren lässt. In diesem Rahmen ist es bevorzugt, wenn die Abrichteinheit am Honringträger angeordnet ist und dieser eine entsprechende Bewegung, z. B. entlang einer horizontalen linearen Achse, ermöglicht. Alternativ ist die Abrichteinheit am Maschinengestell starr oder mit einer Hilfsachse positionierbar angeordnet.

Der Ablauf des Abrichtens der Schleifscheibe und des Profilierens des Honrings umfasst bevorzugt folgende Schritte:
1. Vorprofilieren der Schleifscheibe (Schruppen) mit Hilfe von statischen und/oder rotierenden Werkzeugen der Abrichteinheit
2. in genaue Form bringen und schärfen (schnittig machen) der Schleifscheibe (Schlichten) mit Hilfe von rotierenden Werkzeugen der Abrichteinheit
3. Vorprofilieren des Honring-Rohlings mit Hilfe der Schleifscheibe
4. in genaue Form bringen und schärfen (schnittig machen) des vorprofilierten Honring-Rohlings mit Hilfe der Schleifscheibe

Bei einer bevorzugten Ausführungsform sind eine Drehachse der Werkstückspindel und eine Drehachse der Schleifscheibe senkrecht zueinander orientiert. Bei im Wesentlichen horizontal orientiertem Honring steht die Drehachse der Werkstückspindel beispielsweise im Wesentlichen vertikal, während die Drehachse der Schleifscheibe horizontal orientiert ist.

Diese Anordnung ist gut für das Profilieren des Honrings, d. h. für die Erzeugung der Verzahnung im Honring-Rohling, geeignet.

Bei einer Ausführungsform der Erfindung weist die Maschine einen Modulträger mit mindestens einer Kopplung für ein Bearbeitungsmodul auf, wobei der Modulträger derart am Maschinengestell angeordnet ist, dass sich die Kopplung innerhalb eines echt dreidimensionalen Raumgebiets relativ zum Honringträger positionieren lässt, wobei das Schleifmodul und das Werkstückspindelmodul an der Kopplung des Modulträgers ankoppelbar sind.

Die relative Positionierbarkeit der Kopplung bezüglich des Honringträgers innerhalb eines echt dreidimensionalen Raumgebiets kann auf verschiedene Weise realisiert sein. So kann beispielsweise die Kopplung entlang von drei kartesischen Achsen beweglich ausgeführt sein, oder eine oder mehrere dieser Achsen sind Freiheitsgrade des Honringträgers. Ferner können eine oder mehrere der Achsen auch als Schwenkachsen o. ä. ausgebildet sein.

Mit Vorteil ist die mindestens eine Kopplung für das Bearbeitungsmodul mit einem Schnellspannsystem versehen. So können die Bearbeitungsmodule schnell und einfach ausgewechselt werden.

Alternativ oder zusätzlich kann der Modulträger mehrere Kopplungen für Bearbeitungsmodule aufweisen, wobei die Kopplungen von einer Ruhestellung in eine Arbeitsstellung bringbar sind. Somit erübrigt sich ein Austausch der Bearbeitungsmodule, und ein vollautomatischer Betrieb ohne manuelle Operationen oder externe Komponenten wird möglich.

Alternativ ist eine Vorrichtung vorhanden, welche den Werkzeugwechsel vornimmt, oder die Module werden manuell gewechselt.

In einer bevorzugten Ausführungsform sind das Werkstückspindelmodul und das Schleifmodul voneinander unabhängig am Maschinengestell angeordnet. So kann das Werkstückspindelmodul verhältnismässig steif ausgebildet werden, um die beim Honen auftretenden Kräfte aufnehmen zu können, während das Schleifmodul kompakt und flexibel ausgeführt ist. Das Werkstückspindelmodul ist beispielsweise mit vertikal nach oben gerichteter Spindel in einem Aufnahmeraum des Maschinengestells unterhalb des Honringträgers gelagert, während das Schleifmodul oberhalb des Honringträgers am Maschinengestell, beispielsweise an einem Maschinenturm, angeordnet ist. Die Drehachse der Schleifscheibe des Schleifmoduls ist in diesem Fall im Wesentlichen horizontal orientiert.

Bei einer bevorzugten Ausführungsform umgibt das Maschinengestell den Honringträger und der Honringträger ist an zwei bezüglich des Honringträgers im Wesentlichen diametral gegenüberliegenden Lagerstellen des Maschinengestells entlang einer horizontalen Achse, welche durch die Lagerstellen verläuft, linear beweglich und um diese Achse rotativ beweglich gelagert.

Diese Lösung ermöglicht einen einfachen und kompakten Aufbau der erfindungsgemässen Maschine. Das Maschinengestell dient nicht nur als strukturelles Element zur Lagerung der einzelnen Komponenten der Maschine und aller benötigten Achsen, sondern zumindest teilweise auch zur Bildung eines Arbeitsraums, in welchem die Bearbeitung stattfindet.

Zum Honen von Innenverzahnungen lässt sich im Honringträger auch das zu bearbeitende Werkstück und im Gegenzug auf der Werkstückspindel das (aussen profilierte) Honwerkzeug (abrasives Zahnrad) einspannen.

Vorzugsweise bildet das Maschinengestell eine im Wesentlichen geschlossene Hülle, welche einen Arbeitsraum umschliesst. Insbesondere ist die Hülle derart ausgebildet, dass das Austreten von Schmierstoffen oder Spänen zuverlässig verhindert wird. Gleichzeitig verhindert sie Personenkontakt, welcher zu Verletzungen führen könnte. Dadurch erübrigen sich den Honringträger umgebende weitere Abschirmungen weitgehend. Das Maschinengestell ist beispielsweise nach unten und mantelseitig abgeschlossen und weist zum Arbeitsraum nur oben eine Öffnung auf. Durch diese Öffnung sind der Honringträger und gegebenenfalls eine unten angeordnete Werkstückspindel zugänglich. Das Maschinengestell kann weitere (ggf. verschliessbare) Öffnungen aufweisen, z. B. zu Wartungszwecken.

Bevorzugt ist das Maschinengestell geradzylindrisch, insbesondere kreiszylindrisch, ausgebildet. Die Form eines geraden Kreiszylinders ermöglicht eine kompakte und zugleich stabile Geometrie. Andere Formen der Grundfläche des geraden Zylinders, wie z. B. Quadrate, Rechtecke, Polygone mit höherer Eckenzahl oder Ellipsen, sind ebenfalls möglich.

Bevorzugt umfassen die Lagerstellen Gleitlager bzw. hydrostatische Lager. Dadurch lässt sich die erfindungsgemässe Maschine kostengünstig und wartungsarm realisieren. Die Gleitlager weisen zudem eine hohe Steifigkeit und eine hohe Dämpfung auf. Mit Vorteil werden die Gleitlager durch Gleitbüchsen gebildet, die in entsprechende Öffnungen des Maschinengestells eingesetzt und mit Dichtungen gegen Verschmutzungen versehen sind. Mit den Gleitbüchsen können beispielsweise entsprechend dimensionierte Tragelemente, z. B. Stahlrohre, zusammenwirken, welche beidseitig des Honringträgers in der horizontalen Achse verlaufen, den Honring somit gleichzeitig tragen und auch entlang seiner linearen Bewegungsachse führen. Vorzugsweise ermöglichen die Gleitlager sowohl diese horizontale Bewegung als auch die rotative Bewegung des Honringträgers um die horizontale Achse, dienen also als Radiallager mit zwei Freiheitsgraden, einem linearen und einem rotativen Freiheitsgrad.

Besonders bevorzugt sind die Tragelemente derart am Honringträger angebracht, dass sie in ihrer Verlängerung durch den Mittelpunkt des Honringträgers verlaufen. Dies ermöglicht eine besonders einfache und stabile Konstruktion.

Alternativ werden anstelle von Gleitlagern z. B. Wälzlager eingesetzt. Die Träger können auch bei der Verwendung von Wälzlagern gemäss der vorstehend skizzierten Geometrie ausgebildet sein. Die rotative Beweglichkeit kann unabhängig von den Lagerstellen des Maschinengestells realisiert werden, z. B. indem die Träger drehfeste und relativ dazu um die Längsachse der Träger verdrehbare Abschnitte aufweisen.

Eine weitere Möglichkeit ist der Einsatz von Kugelbüchsen. So können - wie bei Gleitlagern - beide Bewegungsrichtungen mit derselben Lagereinheit zur Verfügung gestellt werden.

Bei einer bevorzugten Ausführungsform umfasst die Maschine einen Träger, auf welchem ein erster Antrieb für eine lineare Bewegung des Honringträgers entlang der durch die Lagerstellen verlaufenden horizontalen Achse und ein zweiter Antrieb für eine rotative Bewegung des Honringträgers um diese Achse angeordnet sind. Der Träger ist ausserhalb des Maschinengestells angeordnet und zusammen mit dem Honringträger entlang der horizontalen Achse verschiebbar. Das entsprechende Tragelement für den Honringträger ist mit Vorteil in axialer Richtung fest mit dem Träger, jedoch um seine Längsachse gegenüber dem Träger in einem gewissen Winkelbereich verdrehbar.

Die ausserhalb des Maschinengestells angeordneten Antriebe sind von Einflüssen des Bearbeitungsvorgangs geschützt und interferieren nicht mit der Werkstückspindel oder dem Honringträger. Durch die mitlaufende Anordnung der Antriebe ergibt sich eine einfache Kraftübertragung auf die zu betätigenden Achsen. Weil der Weg des Trägers und damit auch der mitbewegten Antriebe (z. B. Servomotoren) gering ist, kann deren Energieversorgung und Steuerung auf einfache Weise durch normale flexible Leiter erfolgen.

Mit Vorteil ist der erste Antrieb an eine Kugelumlaufspindel gekoppelt, wobei die Kugelumlaufspindel am Maschinengestell abgestützt ist. Dadurch ergibt sich eine einfache und zuverlässige lineare Verstellmöglichkeit für die Tragelemente des Honringträgers. Der erste Antrieb ist beispielsweise über ein Getriebe mit der Kugelumlaufspindel verbunden, letztere kann sich durch eine entsprechende Öffnung in den Innenraum des Maschinengestells erstrecken.

Alternativ erfolgt eine andere Übertragung, z. B. über eine andersartige Spindel oder eine Zahnstange, oder es wird ein Direktantrieb, wie ein Linearmotor, verwendet.

Bevorzugt ist weiter ein Führungselement am Träger fest angeordnet, wobei das Führungselement mit einer weiteren Lagerstelle des Maschinengestells zusammenwirkt. Dieses Führungselement stellt eine Verdrehsicherung für den Träger dar, so dass der zweite Antrieb für die Drehbewegung des Tragelements auf einfache Weise am Träger abgestützt werden kann.

Mit Vorteil ist das Maschinengestell, jedenfalls der Unterteil, welcher den Arbeitsraum umschliesst, im Wesentlichen aus Kunststein hergestellt. Ein derartiges Gestell ist kostengünstig herstellbar und bildet eine stabile Grundlage für die erfindungsgemässe Maschine.

In weiteren bevorzugten Ausführungsformen ist das Maschinengestell im Wesentlichen aus Stahl hergestellt. Diese Materialwahl ermöglicht eine besonders kompakte Ausführung der Maschine. Für den Mantel des Maschinengestells geeignete Stahlrohre sind zudem zu verhältnismässig geringen Kosten im Markt erhältlich.

Das Maschinengestell kann beispielsweise auch aus Granit oder einer Kombination der genannten Materialien hergestellt sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Schrägansicht einer ersten Ausführungsform einer Maschine zur Herstellung des Honrings und zum Honen mit dem hergestellten Honring;
- Fig. 2: eine Schrägansicht des Unterteils der Maschine;
- Fig. 3: eine Seitenansicht des Unterteils;
- Fig. 4: eine Draufsicht des Unterteils;
- Fig. 5: einen vertikalen Querschnitt durch den Unterteil;
- Fig. 6A, B: Schrägansichten des Unterteils aus verschiedenen Betrachtungswinkeln, mit transparent dargestelltem Maschinengestell;
- Fig. 7: eine Schrägansicht einer zweiten Ausführungsform einer Maschine zur Herstellung des Honrings und zum Honen mit dem hergestellten Honring; und
- Fig. 8: eine Schrägansicht einer dritten Ausführungsform einer Maschine zur Herstellung des Honrings und zum Honen mit dem hergestellten Honring.

Grundsätzlich sind in den Figuren gleiche Teile mit gleichen Bezugszeichen versehen.

### Wege zur Ausführung der Erfindung

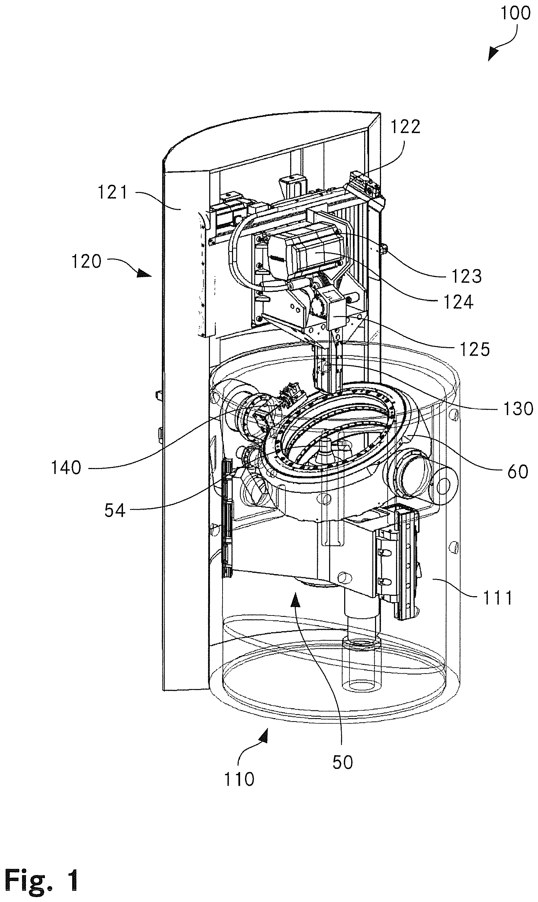

Ein Ausführungsbeispiel der erfindungsgemässen Maschine zur Herstellung des Honrings und zum Honen mit dem hergestellten Honring ist in den Figuren 1 - 6 dargestellt. Die Figur 1 zeigt eine Schrägansicht der Maschine.

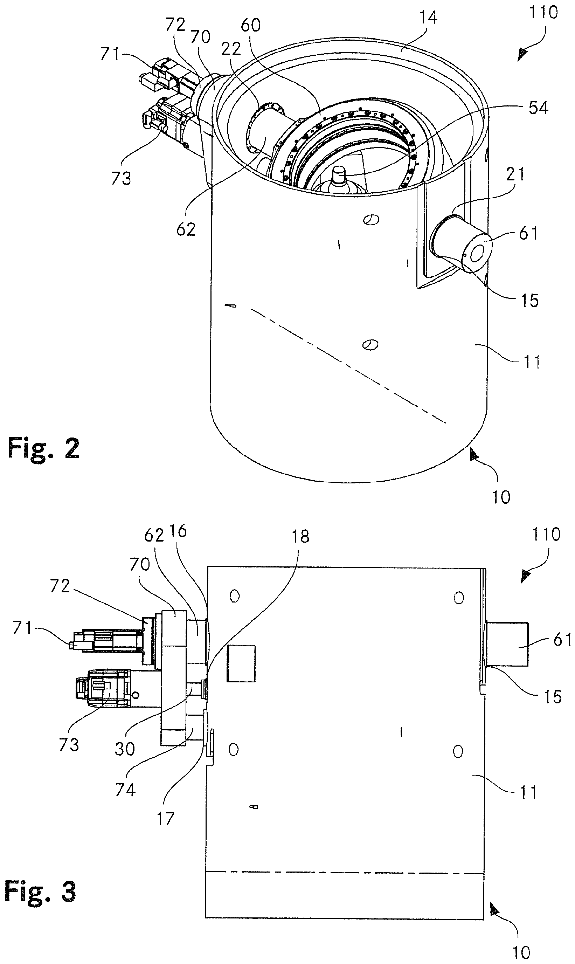

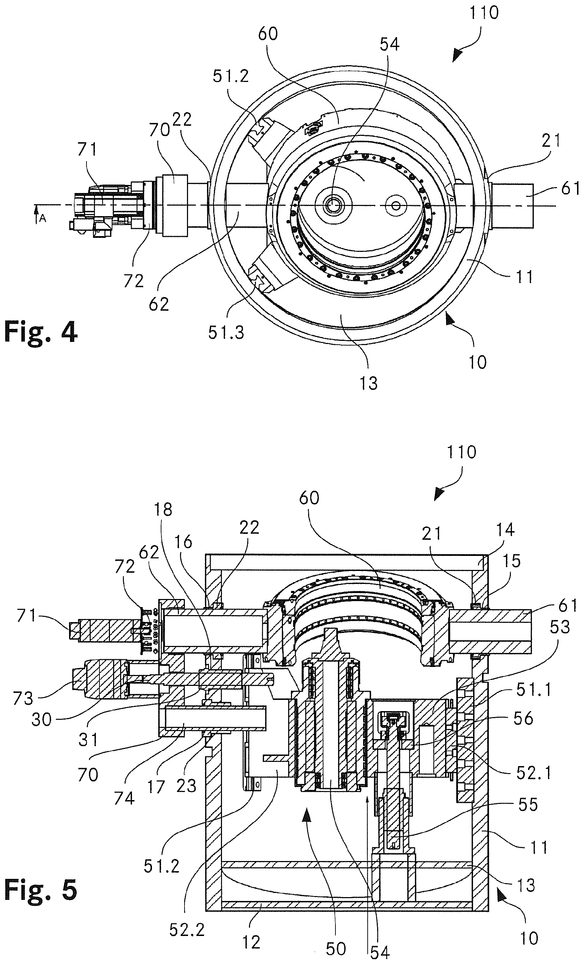

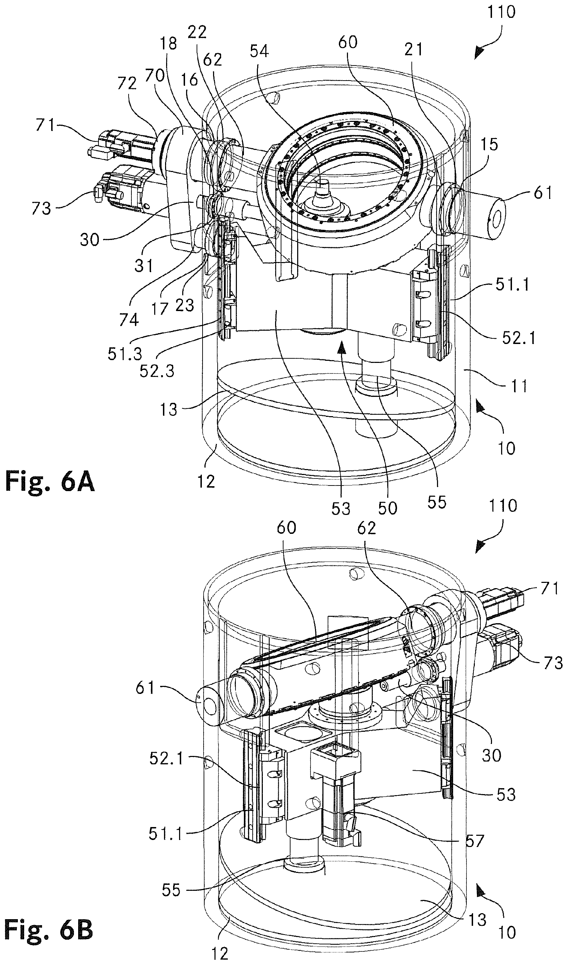

Die Maschine 100 umfasst einen Unterteil 110 und einen Oberteil 120. Der Unterteil 110 der Maschine ist in den Figuren 2-6 dargestellt: Die Figur 2 zeigt eine Schrägansicht, die Figur 3 eine Seitenansicht, die Figur 4 eine Draufsicht, die Figur 5 einen vertikalen Querschnitt und die Figuren 6A, 6B zwei Schrägansichten aus verschiedenen Betrachtungswinkeln, mit transparent dargestelltem Maschinengestell.

Der Unterteil 110 umfasst ein Maschinengestell 10. Dessen Mantel 11 ist durch ein kreiszylindrisches Stahlrohr gebildet. Der kreisförmige Boden 12 wird durch eine entsprechend geformte und im Rohr horizontal befestigte Stahlplatte gebildet. Oberhalb des Bodens 12 ist eine weitere, dünnere Stahlplatte 13 im Mantel 11 befestigt. Diese dünnere Stahlplatte 13 ist schräg zum Boden 12 orientiert und hat entsprechend eine elliptische Form, so dass sie den Mantel 11 des Maschinengestells 10 ausfüllt. Die dünnere Stahlplatte 13 nimmt Schmierstoffe und Späne auf, wonach sich diese aufgrund der Schwerkraft auf der Stahlplatte 13 nach unten bewegen und am unteren Ende der Platte aufgefangen und ggf. weggeführt werden können.

Der Mantel 11 des Maschinengestells 10 weist am oberen Ende eine umlaufende Aufnahmenut 14 auf, die durch eine innenliegende, in die Stirnseite mündende Ausnehmung gebildet ist. In diese Aufnahmenut 14 lässt sich für den reinen Honbetrieb mit unten angeordneter Werkstückspindel von oben ein flacher kreiszylindrischer Deckel einsetzen, um den durch das Maschinengestell 10 gebildeten Aufnahmeraum abzuschliessen. Der Deckel kann aus einem transparenten Material gefertigt sein, so dass eine visuelle Kontrolle des Bearbeitungsvorgangs möglich bleibt.

Im Maschinengestell 10 sind vier runde Öffnungen 15, 16, 17, 18 ausgebildet, deren Achsen jeweils horizontal und senkrecht zur Mantelfläche des Mantels 11 verlaufen. Die zwei Öffnungen 15, 16 liegen sich diametral gegenüber, deren Achsen fallen zusammen.

Sie weisen jeweils eine Stufe ungefähr bei halber Manteldicke auf, wobei sich von aussen nach innen der Querschnitt der Öffnungen 15, 16 bei der Stufe erweitert. In die Öffnungen 15, 16 sind Gleitbüchsen 21, 22 eingesetzt. Die Aussenkontur der Gleitbüchsen 21, 22 sind an die Innenkontur der Öffnungen 15, 16 mit den Stufen angepasst. Die Gleitbüchsen 21, 22 und deren Funktion sind weiter unten näher beschrieben.

Die Öffnung 17 ist vertikal unterhalb der Öffnung 16 angeordnet. Sie weist bei ungefähr halber Manteldicke ebenfalls eine Stufe auf, wobei sich dort aber von aussen nach innen der Querschnitt verringert. In die Öffnung 17 ist ebenfalls eine Gleitbüchse 23 eingesetzt. Der Durchmesser der Öffnung 17 und der Gleitbüchse 23 ist geringer als derjenige der Öffnungen 15, 16.

Die letzte Öffnung 18 befindet sich auf der Verbindungslinie zwischen den Zentren der untereinander angeordneten Öffnungen 16, 17. Ihr Durchmesser ist noch etwas geringer als derjenige der unteren Öffnung 17. In die mittlere Öffnung 18 ist die Mutter 31 einer Kugelumlaufspindel 30 eingesetzt.

Im Maschinengestell 10 ist eine Werkstückspindeleinrichtung 50 gelagert. Diese umfasst drei innen am Mantel 11 des Maschinengestells 10 befestigte, vertikal verlaufende Führungsschienen 51.1, 51.2, 51.3. Die erste Führungsschiene 51.1 ist direkt unterhalb der einzelnen runden Öffnung 15 angeordnet, die weiteren zwei Führungsschienen 51.2, 51.3 sind in Bezug auf ihre Winkelposition symmetrisch zu den drei weiteren Öffnungen 16, 17, 18 angeordnet, der Winkel zur Achse der Öffnungen 15, 16, 17, 18 beträgt je ca. 40°. Mit jeder der Schienen 51.1...3 wirkt je ein Laufwagen 52.1, 52.2, 52.3 zusammen, wobei jeder der Laufwagen 51.1...3 je zwei Rolleneinheiten aufweist, die in an sich bekannter Weise mit der Aussenprofilierung der Schienen 51.1...3 zusammenwirken.

Die Laufwagen 51.1...3 sind an einem Spindelträger 53 fest angebracht. Dieser ist in der Draufsicht im Wesentlichen Y-förmig, wobei sich die drei Schenkel zu den jeweiligen Laufwagen 51.1...3 erstrecken. In einer zentralen Öffnung des Spindelträgers 53 ist die Werkstückspindel 54 gelagert. Es handelt sich dabei um eine an sich bekannte Spindel mit Direktantrieb. Das freie Ende der Werkstückspindel 54 umfasst Kopplungsmittel zur direkten oder indirekten Befestigung des Werkstücks.

Die Mutter 56 einer Kugelumlaufspindel 55 ist ebenfalls im Spindelträger 53 gelagert. Die Kugelumlaufspindel erstreckt sich vom Spindelträger 53 vertikal nach unten und verläuft durch eine Öffnung in der schräg orientierten Stahlplatte 13, ihr unteres Ende ist am Boden 12 des Maschinengestells 10 abgestützt. Der Antrieb der Kugelumlaufspindel 55 erfolgt über einen Zahnriemen durch einen Motor 57, welcher aussen am Spindelträger 53 angeflanscht ist und sich mit diesem in vertikaler Richtung auf und ab bewegt.

Die Werkstückspindel 54 kann mittels einer linearen Bewegung der Laufwagen 51.1...3 gegenüber den Führungsschienen 51.1...3 in vertikaler Richtung bewegt werden, so dass das freie Ende der Werkstückspindel 54 mit den Kopplungsmitteln jede benötigte Ebene innerhalb der Honringaufnahme (siehe unten) erreichen kann. Während des Honvorgangs führt die Werkstückspindel 54 dynamisch einen Pendelhub mit einer Amplitude von beispielsweise ca. 2 mm aus. Ferner kann sie in einem Bereich von ca. 60 mm in der Arbeitshöhe verstellt werden (statisch). Beide Bewegungen werden vom Motor 57 über die Kugelumlaufspindel 55 bewirkt.

Wie weiter unten ersichtlich ist das Vorhandensein der Werkstückspindeleinrichtung 50 nicht zwingend, sie kann im Rahmen der Maschine 100 zur Herstellung des Honrings und zum Honen auch weggelassen werden, wobei das Werkstück in diesem Fall am weiter unten beschriebenen Werkstückspindelmodul angebracht wird.

In den in den Öffnungen 15, 16, 17 des Maschinengestells 10 aufgenommenen Gleitbüchsen 21, 22, 23 ist die Trageinrichtung für einen Honringträger 60 gelagert. Der Honringträger ist in an sich bekannter Weise torusförmig ausgebildet, er umfasst eine Aufnahme für einen Honring, welche über einen Direktantrieb in eine Drehbewegung um die Torusachse versetzt werden kann. Die Trageinrichtung umfasst zwei Stahlrohre 61, 62, die diametral gegenüberliegend am Aussenmantel des Honringträgers 60 befestigt sind. Die Stahlrohre 61, 62 erstrecken sich vom Honringträger 60 beidseitig durch die entsprechenden Öffnungen 15, 16 im Maschinengestell 10 nach aussen. Ihre Aussendimensionen sind so gewählt, dass sie passgenau mit den entsprechenden Gleitbüchsen 21, 22 zusammenwirken können. Während das mit der einzelnen Öffnung 15 zusammenwirkende Stahlrohr 61 an seinem aussenliegenden Ende frei ist, ist das aussenliegende Ende des diametral gegenüberliegenden Stahlrohrs 62 an einem Antriebsträger 70 gelagert. Die Lagerung ist so ausgeführt, dass sich das Stahlrohr 62 um seine Längsachse gegenüber dem Antriebsträger 70 verdrehen lässt, dass jedoch das Stahlrohr 62 in axialer Richtung gegenüber dem Antriebsträger 70 fest ist.

Mit der Längsachse des Stahlrohrs 62 fluchtet die Abtriebsachse eines auf der radial äusseren Seite des Antriebsträgers 70 befestigten und gegenüber diesem abgestützten Servomotors 71. Die Abtriebsachse wirkt über ein Robotergetriebe 72 auf das Stahlrohr 62 und vermag somit dieses relativ zum Antriebsträger 70 zu verdrehen. Entsprechend ergibt sich eine veränderte Winkelstellung des Honringträgers 60 um die gemeinsamen Längsachsen der beiden Stahlrohre 61, 62.

Ein weiterer Servomotor 73 ist ebenfalls auf der äusseren Seite des Antriebsträgers 70 befestigt und gegenüber diesem abgestützt. Der weitere Servomotor 73 wirkt über eine Kupplung mit der Kugelumlaufspindel 30 zusammen, die wiederum mit der oben erwähnten, in die mittlere Öffnung 18 eingesetzten Mutter 31 zusammenwirkt. Durch Betätigen des Servomotors 73 kann der Antriebsträger 70 gegenüber dem Maschinengestell 10 in horizontaler Richtung radial nach innen bzw. nach aussen verschoben werden. Entsprechend ändert die Position des Honringträgers 60.

Schliesslich ist ein weiteres Stahlrohr 74 fix am Antriebsträger 70 befestigt. Es erstreckt sich horizontal und radial nach innen durch die untere Öffnung 17 hindurch in den Innenraum des Maschinengestells 10. Dieses Stahlrohr 74 dient zur Verdrehsicherung und Abstützung, insbesondere für das mittels des Servomotors 71 auf das Stahlrohr 62 ausgeübte Drehmoment.

Der Oberteil 120 der Maschine 100 ist turmartig ausgebildet. Er ist seitlich, im Bereich der Antriebe für die Schwenk- und lineare Bewegung des Honringträgers 60, am Maschinengestell 11 befestigt. Er weist ein Gehäuse 121 auf, welches einen Sektor des Maschinengestells 11 des Unterteils 110 aufnimmt und sich nach oben über den Unterteil 110 hinaus erstreckt.

Im oberen Abschnitt des Gehäuses 121 des Oberteils 120 sind Schienen angeordnet, auf welchen ein Wagen 122 vertikal beweglich gelagert ist. Am Wagen 122 ist in horizontaler Richtung beweglich ein Schlitten 123 gelagert, der die Kopplung für die Bearbeitungsmodule trägt. Der Schlitten 123 trägt einen Spindelantrieb 124 und eine Kopplung 125 mit einem Schnellspannsystem, an welche Bearbeitungsmodule angekoppelt werden können und über welche eine vom Spindelantrieb 124 bereitgestellte Drehbewegung auf die Bearbeitungsmodule übertragbar sind. In der Darstellung gemäss Figur 1 ist ein schwertartiges Schleifmodul 130 an den Schlitten 123 angekoppelt. Mit Hilfe des Wagens und des Schlittens kann es in einer vertikalen Ebene frei positioniert werden.

Das Schleifmodul 130 trägt am unteren Ende eine abrichtbare Schleifscheibe, z. B. eine Diamant-Schleifscheibe oder eine CBN-Schleifscheibe. Deren Drehachse ist horizontal orientiert, parallel zur vertikalen Ebene, in welcher der Schlitten verschiebbar ist.

Auf der dem Gehäuse 121 zugewandeten Seite des Honringträgers 60 ist auf der oberen Fläche des Honringträgers 60 eine Abrichteinrichtung 140 angeordnet. Diese umfasst einen Antrieb und umfasst Abschnitte bzw. vom Antrieb in Drehbewegung versetzte Scheiben zum Schruppen bzw. Schlichten der Schleifscheibe des Schleifmoduls 130. Zum Schruppen kann beispielsweise eine Radiusplatte oder eine grobe, diamantbelegte Radiusscheibe eingesetzt werden, zum Schlichten eine entsprechend feinere diamantbelegte Radiusscheibe.

Anstelle des Schleifmoduls 130 kann ein Werkstückspindelmodul angekoppelt werden. Dieses umfasst eine Spanneinrichtung zum Einspannen von Werkstücken (insbesondere Zahnradrohlingen), welche um eine vertikale Achse drehbar ist.

Mit der in den Figuren 1 - 6 dargestellten Maschine kann ein kombiniertes Verfahren zur Herstellung des Honrings als auch zum Zahnradhonen betrieben werden. Dazu wird zunächst ein Honsteinrohling in den Honringträger 60 eingespannt. Die Schleifscheibe des an den Oberteil 120 der Maschine 100 angekoppelten Schleifmoduls 130 wird dann mit Hilfe der Abrichteinrichtung 140 abgerichtet. Dazu werden einerseits der Honringträger 60, welcher ja die Abrichteinrichtung 140 trägt, und andererseits der Wagen 122 mit dem Schlitten 123 so bewegt, dass die Schleifscheibe mit dem entsprechenden Werkzeug der Abrichteinrichtung 140 in Eingriff kommt. Durch die kombinierte Bewegung der genannten Komponenten lassen sich die Schleifscheibe und der Honring relativ zueinander innerhalb eines echt dreidimensionalen Raumgebiets frei positionieren.

Nachdem das gewünschte Profil der Schleifscheibe erhalten wurde, wird das Schleifmodul 130 von der Abrichteinrichtung 140 in die Öffnung des Honsteinrohlings verfahren, auch hier findet wieder ein Zusammenwirken der Bewegungen des Wagens 122 mit dem Schlitten 123 und des Honringträgers 60 statt. Nun kann die Profilierung des Honsteinrohlings erfolgen. Im Rahmen des Profilierungsvorgangs kann die Schleifscheibe des Schleifmoduls 130 bei Bedarf stets wieder auf dieselbe Weise nachprofiliert werden, wobei im Rahmen eines Profilierungsvorgangs stets dieselbe Oberflächenbeschaffenheit und Geometrie oder unterschiedliche Oberflächenbeschaffenheiten bzw. Geometrien erzeugt werden können.

Sobald das gewünschte Profil des Honrings erhalten wurde, wird das Schleifmodul 130 in eine Ruhestellung verfahren. Das zu bearbeitende Werkstück, insbesondere ein Zahnradrohling, wird am freien Ende der Werkstückspindel 54 befestigt. Das Werkstück kann dann mit Hilfe des profilierten Honrings bearbeitet werden.

In einer alternativen Verfahrensvariante wird das Schleifmodul 130 durch ein Werkstückspindelmodul ersetzt, sobald das gewünschte Profil des Honrings erhalten wurde. Am Werkstückspindelmodul wird das zu bearbeitende Werkstück, insbesondere ein Zahnradrohling, aufgespannt. Durch Zusammenwirken der Spindel und deren verfahrbare Lagerung (Wagen 122 mit Schlitten 123) mit dem ebenfalls verfahrbaren und schwenkbaren Honringträger 60 sowie dem Direktantrieb für den Honring kann nun das Werkstück gehont werden, wobei für das Profilieren des Honsteins und das Honen dieselbe Aufspannung des Honrings verwendet werden kann. Der für das Zahnradhonen notwendige Pendelhub wird über den Wagen 122 und den entsprechenden Antrieb zur Verfügung gestellt.

Die Ausführung gemäss Figur 1 zeichnet sich durch einen besonders kompakten Aufbau bei hoher Flexibilität aus.

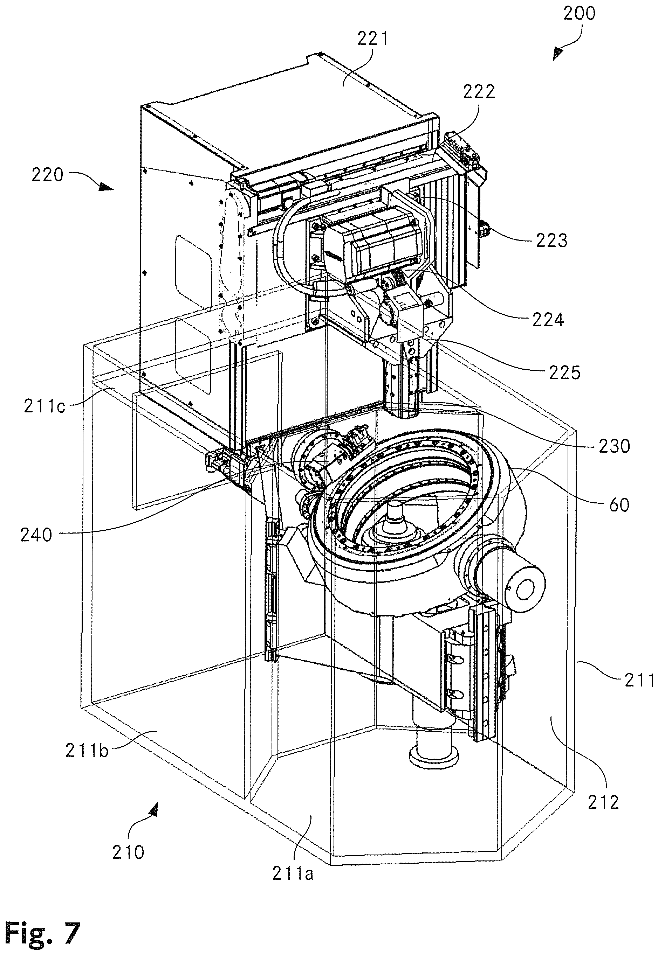

Die Figur 7 zeigt eine Schrägansicht einer zweiten Ausführungsform einer Maschine zur Herstellung des Honrings und zum Honen mit dem hergestellten Honring. Die Maschine 200 entspricht in vielerlei Hinsicht der im Zusammenhang mit den Figuren 1-6 dargestellten Maschine 100 gemäss der ersten Ausführungsform. Sie umfasst einen Unterteil 210 und einen Oberteil 220. Der Unterteil entspricht mit Ausnahme des Maschinengehäuses der im Zusammenhang mit den Figuren 1 - 6 beschriebenen Honmaschine, er ist deshalb nicht nochmals beschrieben.

Das Maschinengehäuse 211 des Unterteils 210 ist geradzylindrisch ausgeführt. Seine Grundfläche umfasst einen sechseckigen Bereich 211a, an welchem sich entlang von drei Kanten ein zweiter Bereich 211b anschliesst, der die Form der Grundfläche auf dieser Seite zu einem Rechteck ergänzt. Entlang der Umrandungen des sechseckigen Bereichs 211a als auch des zweiten Bereichs 211b erstrecken sich Mantelflächen senkrecht nach oben. Es wird zum einen - im sechseckigen Bereich 211a - ein Arbeitsraum 212 gebildet, zum anderen ist der zweite Bereich 211b am oberen Ende der entsprechenden Mantelflächen durch eine horizontale Abdeckung 211c abgedeckt.

Der turmartige Oberteil 220 umfasst ein Grundgehäuse 221, welches sich auf der Abdeckung 211c abstützt. An einer vorderen Seite des Grundgehäuses 221, welche im Wesentlichen bündig an die den Arbeitsraum 212 abschliessende Mantelfläche anschliesst, ist ein Wagen 222 in vertikaler Richtung verfahrbar angeordnet. Auf diesem Wagen 222 wiederum ist ein Schlitten 223 in horizontaler Richtung verfahrbar gelagert. Der Schlitten 223 trägt einen Spindelantrieb 224 und eine Kopplung 225 mit einem Schnellspannsystem, an welche Bearbeitungsmodule angekoppelt werden können und über welche eine vom Spindelantrieb 224 bereitgestellte Drehbewegung auf die Bearbeitungsmodule übertragbar sind. In der Darstellung gemäss Figur 7 ist ein schwertartiges Schleifmodul 230 an den Schlitten 223 angekoppelt. Mit Hilfe des Wagens und des Schlittens kann es in einer vertikalen Ebene frei positioniert werden.

Das Schleifmodul 230 trägt am unteren Ende eine abrichtbare Schleifscheibe. Deren Drehachse ist horizontal orientiert, parallel zur vertikalen Ebene, in welcher der Schlitten verschiebbar ist.

Auf der dem Grundgehäuse 221 zugewandeten Seite des Honringträgers 60 ist auf der oberen Fläche des Honringträgers 60 eine Abrichteinrichtung 240 angeordnet. Diese umfasst einen Antrieb und umfasst Abschnitte bzw. vom Antrieb in Drehbewegung versetzte Scheiben zum Schruppen bzw. Schlichten der Schleifscheibe des Schleifmoduls 230. Zum Schruppen kann beispielsweise eine Radiusplatte oder eine grobe, diamantbelegte Radiusscheibe eingesetzt werden, zum Schlichten eine entsprechend feinere diamantbelegte Radiusscheibe.

Auch mit der in der Figur 7 dargestellten Maschine kann das weiter oben, im Zusammenhang mit den Figuren 1 - 6 beschriebene kombinierte Verfahren zur Herstellung des Honrings und zum Zahnradhonen zur Ausführung gebracht werden.

Anstelle des Schleifmoduls 230 kann ein Werkstückspindelmodul angekoppelt werden. Dieses umfasst eine Spanneinrichtung zum Einspannen von Werkstücken (insbesondere Zahnradrohlingen), welche um eine vertikale Achse drehbar ist. Die in der Darstellung gemäss Figur 7 gezeigte Werkstückspindel wird in diesem Fall nicht benötigt.

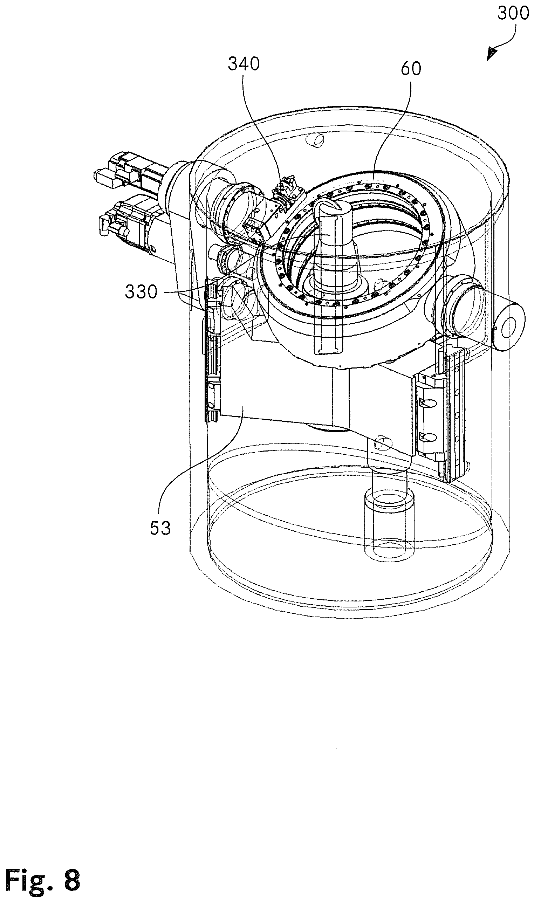

Die Figur 8 zeigt eine Schrägansicht einer dritten Ausführungsform einer Maschine zur Herstellung des Honrings und zum Honen mit dem hergestellten Honring. Die Maschine 300 entspricht in vielerlei Hinsicht der in den Figuren 1-6 dargestellten Maschine 100 mit einem Unterteil mit Werkstückspindeleinrichtung. Im Unterschied zu dieser Maschine sind aber sämtliche Komponenten im Unterteil angeordnet. Die Werkstückspindel 54 kann durch eine Winkelschleifeinheit 330 ausgetauscht werden. Dazu ist mit Vorteil wiederum eine Kopplung mit Schnellspanneinrichtung am Spindelträger 53 angeordnet, wobei mit dieser Kupplung sowohl die Werkstückspindel als auch die Winkelschleifeinheit 330 zusammenwirken können.

Zum Positionieren der Schleifscheibe der Winkelschleifeinheit 330 während des Profilierens des Honrings weist der Spindelträger 53 eine in der Figur 8 nicht sichtbare zusätzliche lineare horizontale Achse auf, mit welcher sich die Winkelschleifeinheit 330 quer zur Längsachse des Honringträgers 60 bewegen lässt. Zum Profilieren der Schleifscheibe der Winkelschleifeinheit 330 kann die Abrichteinheit 340 durch eine entsprechende lineare Bewegung des Honringträgers 60 bis zur Schleifscheibe verfahren werden. Die Betriebsweise der Vorrichtung entspricht im Wesentlichen derjenigen der Vorrichtungen gemäss den Figuren 1 - 6 und 7.

Die Erfindung ist nicht auf die dargestellten Ausführungsbeispiele beschränkt. So kann insbesondere die Geometrie der einzelnen Komponenten, z. B. des Maschinengestells, des Antriebsträgers, der Honringaufnahme oder des Spindelträgers, anders gewählt werden. Die Antriebe können anders ausgebildet oder anders angeordnet sein.

Anstatt über am Maschinengestell befestigte Schienen kann der Spindelträger z. B. auch gegenüber Führungen vertikal verschiebbar sein, die auf einer am Maschinengestell befestigten, sich nach innen erstreckenden Tragestruktur angeordnet sind. Die Führungen können z. B. durch Führungsrohre und Gleitbuchsen realisiert sein. Der Antrieb für die Vertikalbewegung der Spindel kann ebenfalls an der Tragestruktur, d. h. im Unterschied zum oben dargestellten Ausführungsbeispiel ortsfest, angeordnet sein.

Zum Honen von Innenverzahnungen lässt sich im Honringträger auch das zu bearbeitende Werkstück und im Gegenzug auf der Werkstückspindel das (aussen profilierte) Honwerkzeug einspannen.

Wie bereits erwähnt, kann die im Rahmen der ersten beiden Ausführungsbeispiele die untere Spindel weggelassen werden, ihre Aufnahme wird dann durch das Werkstückspindelmodul übernommen. Ferner kann der Oberteil mehrere Kopplungen umfassen, an welche Module ankoppelbar sind. Die Kopplungen können dann mit den angekoppelten Modulen durch geeignete Mittel (z. B. einen Drehteller oder eine lineare Bewegung) in die Arbeitsstellung bzw. in eine Ruhestellung gebracht werden. So ist es z. B. denkbar, dass auf dem Schlitten ein Drehteller mit einer horizontalen Achse angeordnet ist, wobei auf dem Drehteller gegenüberliegend zwei Kopplungen vorgesehen sind. Wird ein Schleifmodul an eine der Kopplungen und ein Werkstückspindelmodul an die andere der Kopplungen angekoppelt, so können die Arbeits- und Ruhepositionen der beiden Module durch eine Rotation um 180° um die horizontale Achse vertauscht werden. Ohne externe Elemente zum Werkzeugwechsel ist so ein vollautomatischer Profilier- und Honprozess durchführbar.

Zur Erhöhung der Flexibilität kann der Oberteil der Maschine entlang einer horizontalen Achse, welche senkrecht steht zu dem Bewegungsachsen des Wagens und des Schlittens entlang der Abdeckung des Maschinengestells des Unterteils bewegbar sein, z. B. indem er auf Schienen gelagert wird.

Falls eine gesonderte Spindel vorhanden ist und falls diese Spindel und das Schleifmodul in einer horizontalen Richtung aufeinander zugestellt werden können, kann mit Hilfe des Schleifmoduls auch ein in der unteren Spindel eingespanntes Honwerkzeug zum Profilieren von Innenverzahnungen bearbeitet werden. Anschliessend wird der zu bearbeitende Rohling zur Profilierung der Innenverzahnung in den Honringträger eingespannt. Auch hier kann die Aufspannung des Honwerkzeugs bestehen bleiben.

Der Vollständigkeit halber ist zu erwähnen, dass die beschriebenen Maschinen auch im reinen Schleif- bzw. Honbetrieb betrieben werden können. Dabei werden mit Hilfe des Schleifmoduls Innen- und/oder Aussenprofilierungen geschaffen, bzw. mit Hilfe eines Honwerkzeugs (welches nicht mit der erfindungsgemässen Maschine gefertigt sein muss) werden Werkstücke zur Erzeugung einer Aussen- oder Innenverzahnung gehont. Der Einsatzbereich der Maschinen ist somit sehr breit, und je nach zu bearbeitendem Werkstück kann der optimale Prozess bzw. die optimale Prozesskombination gewählt werden.

Zusammenfassend ist festzustellen, dass durch die Erfindung eine Maschine zur Bearbeitung von Werkstücken sowie ein Verfahren zum Zahnradhonen geschaffen werden, welche eine erhöhte Flexibilität bei reduzierten Kosten ermöglichen.

## Patentansprüche

1. Maschine (100,200,300) zur Bearbeitung von Werkstücken, umfassend
a) ein Maschinengestell (10);
b) einen am Maschinengestell gelagerten Honringträger (60), in welchen ein Honring oder ein Honring-Rohling einspannbar und um seine zentrale Achse drehend antreibbar ist;
c) ein Werkstückspindelmodul (50) mit einer Werkstückspindel (54), wobei im Bereich eines freien Endes der Werkstückspindel ein mit dem im Honringträger (60) eingespannten Honring zu bearbeitendes Werkstück anbringbar ist; **gekennzeichnet durch**
d) ein Schleifmodul (130,230,330) zur Profilierung eines Honrings durch Schleifen eines Honring-Rohlings, wobei das Schleifmodul derart am Maschinengestell angeordnet ist, dass sich eine Schleifscheibe des Schleifmoduls innerhalb eines echt dreidimensionalen Raumgebiets relativ zum Honringträger positionieren lässt.

2. Maschine nach Anspruch 1, **gekennzeichnet durch** eine am Maschinengestell angeordnete Abrichteinheit (140,240,340) zum Abrichten der Schleifscheibe, wobei das Schleifmodul (130) zwischen einer Abrichtstellung und einer Schleifstellung verfahrbar ist.

3. Maschine nach Anspruch 2, **dadurch gekennzeichnet, dass** eine Drehachse der Werkstückspindel und eine Drehachse der Schleifscheibe senkrecht zueinander orientiert sind.

4. Maschine nach einem der Ansprüche 1 bis 3, **gekennzeichnet durch** einen Modulträger (223,224) mit mindestens einer Kopplung (225) für ein Bearbeitungsmodul, wobei der Modulträger derart am Maschinengestell angeordnet ist, dass sich die Kopplung innerhalb eines echt dreidimensionalen Raumgebiets relativ zum Honringträger positionieren lässt, wobei das Schleifmodul und das Werkstückspindelmodul an der Kopplung des Modulträgers ankoppelbar sind.

5. Maschine nach Anspruch 4, **dadurch gekennzeichnet, dass** die mindestens eine Kopplung (225) für das Bearbeitungsmodul (230) mit einem Schnellspannsystem versehen ist.

6. Maschine nach Anspruch 4 oder 5, **dadurch gekennzeichnet, dass** der Modulträger mehrere Kopplungen für Bearbeitungsmodule aufweist, wobei die Kopplungen von einer Ruhestellung in eine Arbeitsstellung bringbar sind.

7. Maschine nach einem der Ansprüche 1 bis 6, **dadurch gekennzeichnet, dass** das Maschinengestell den Honringträger umgibt und der Honringträger an zwei bezüglich des Honringträgers im Wesentlichen diametral gegenüberliegenden Lagerstellen (21,22) des Maschinengestells entlang einer horizontalen Achse, welche durch die Lagerstellen verläuft, linear beweglich und um diese Achse rotativ beweglich gelagert ist.

8. Maschine nach Anspruch 7, **dadurch gekennzeichnet, dass** das Maschinengestell eine im Wesentlichen geschlossene Hülle bildet, welche einen Arbeitsraum umschliesst.

9. Maschine nach Anspruch 8, **dadurch gekennzeichnet, dass** ein den Arbeitsraum umschliessender Abschnitt des Maschinengestells geradzylindrisch, insbesondere kreiszylindrisch, ausgebildet ist.

10. Maschine nach einem der Ansprüche 7 bis 9, **gekennzeichnet durch** einen Träger (70), auf welchem ein erster Antrieb (73) für eine lineare Bewegung des Honringträgers entlang der durch die Lagerstellen verlaufenden horizontalen Achse und ein zweiter Antrieb (71) für eine rotative Bewegung des Honringträgers um diese Achse angeordnet sind, wobei der Träger (70) ausserhalb des Maschinengestells angeordnet und zusammen mit dem Honringträger entlang der horizontalen Achse verschiebbar ist.

11. Verfahren zum Zahnradhonen, welches folgende Schritte umfasst:
a) Anbringen eines Honring-Rohlings in einem Honringträger (60) einer Maschine (100,200,300);
b) Herstellen eines Honrings durch Schleifen des Honring-Rohlings mit einem Schleifmodul (130,230,330) der Maschine;
c) Bringen des Schleifmoduls in eine Ruhestellung und Positionieren eines Werkstückspindelmoduls (50) der Maschine in einer Arbeitsstellung;
d) Anbringen eines zu honenden Zahnradrohlings an einer Werkstückspindel (54) des Werkstückspindelmoduls; und
e) Herstellen eines Zahnrads durch Honen des Zahnradrohlings mittels des Honrings.

12. Verfahren nach Anspruch 11, **dadurch gekennzeichnet, dass** vor oder während der Herstellung des Honrings eine Schleifscheibe des Schleifmoduls mit einer an der Maschine angeordneten Abrichteinheit (140,240,340) abgerichtet wird.

## Claims

1. A machine (100, 200, 300) for honing workpieces, comprising
a) a machine frame (10);
b) a honing ring carrier (60) mounted on the machine frame in which a honing ring or a honing ring blank is clampable and is drivable in rotation around its central axis;
c) a workpiece spindle module (50) with a workpiece spindle (54), wherein a workpiece to be machined with the honing ring clamped in the honing ring carrier (60) is attachable in the region of a free end of the workpiece spindle;
**characterised in that**
d) a grinding module (130, 230, 330) for profiling a honing ring by grinding a honing ring blank, wherein the grinding module is arranged on the machine frame such that a grinding disc of the grinding module can be positioned relative to the honing ring carrier inside a truly three-dimensional space.

2. The machine according to claim 1, **characterised by** a dressing unit (140, 240, 340) arranged on the machine frame for dressing the grinding disc, wherein the grinding module (130) is movable between a dressing position and a grinding position.

3. The machine according to claim 2, **characterised in that** an axis of rotation of the workpiece spindle and an axis of rotation of the grinding disc are oriented perpendicularly to each other.

4. The machine according to one of claims 1 to 3, **characterised by** a module carrier (223, 224) having at least one coupling (225) for a machining module, wherein the module carrier is arraanged on the machine frame in such a manner that the coupling can be positioned relative to the honing ring carrier inside a truly three-dimensional space, with the grinding module and the workpiece spindle module being couplable to the coupling of the module carrier.

5. The machine according to claim 4, **characterised in that** the at least one coupling (225) for the machining module (230) is provided with a rapid clamping system.

6. The machine according to claim 4 or 5, **characterised in that** the module carrier has a plurality of couplings for machining modules, with said couplings being movable from an idle position into an operating position.

7. The machine according to one of claims 1 to 6, **characterised in that** the machine frame surrounds the honing ring carrier and the honing ring carrier is mounted at two bearing points (21, 22) on the machine frame, said bearing points being substantially diametrically opposite one another relative to the honing ring carrier, so as to be movable linearly along a horizontal axis which extends through the bearing points and so as to be movable in rotation around this axis.

8. The machine according to claim 7, **characterised in that** the machine frame forms a substantially closed casing which surrounds a working space.

9. The machine according to claim 8, **characterised in that** a portion of the machine frame surrouunding the working space is realised in a straight cylindrical manner, in particular a circular cylindrical manner.

10. The machine according to one of claims 7 to 9, **characterised by** a carrier (70) on which a first drive (73) for moving the honing ring carrier linearly along the horizontal axis extending through the bearing points and a second drive (71) for moving the honing ring carrier in rotation around this axis are arranged, wherein the carrier (70) is arranged outside the machine frame and is displaceable along the horizontal axis together with the honing ring carrier.

11. A method for honing gear wheels which includes the following steps:
a) mounting a honing ring blank in a honing ring carrier (60) of a machine (100, 200, 300);
b) production of a honing ring by grinding the honing ring blank with a grinding module (130, 230, 330) of the machine;
c) putting the grinding module into an idle position and positioning a workpiece spindle module (50) of the machine in an operating position;
d) mounting a gear wheel blank to be honed on a workpiece spindle (54) of the workpiece spindle module; and
e) production of a gear wheel by honing the gear wheel blank using the honing ring.

12. The method according to claim 11, **characterised in that** prior to or during production of the honing ring, a grinding disc of the grinding module is dressed with a dressing unit (140, 240, 340) which is arranged on the machine.

## Revendications

1. Machine (100, 200, 300) d'usinage de pièces, comprenant
a) un bâti (10) ;
b) un dispositif porte-meule de rodage (60) supporté sur le bâti et dans lequel une meule de rodage ou une ébauche de meule de rodage peut être montée et peut être entraînée en rotation sur son axe central ;
c) un module à broche porte-pièce (50) présentant une broche porte-pièce (54), une pièce destinée à être usiner au moyen de la meule de rodage montée dans le dispositif porte-meule de rodage (60) pouvant être installée à proximité d'une extrémité libre de la broche porte-pièce ;
**caractérisée par**
d) un module de meulage (130, 230, 330) permettant de profiler une meule de rodage par meulage d'une ébauche de meule de rodage, ledit module de meulage étant disposé sur le bâti de manière qu'un disque de meulage du module de meulage puisse être positionné à l'intérieur d'un espace véritablement tridimensionnel, par rapport au dispositif porte-meule de rodage.

2. Machine selon la revendication 1, **caractérisée par** une unité de dressage (140, 240, 340) disposée sur le bâti pour dresser le disque de meulage, ledit module de meulage (130) étant déplaçable entre une position de dressage et une position de meulage.

3. Machine selon la revendication 2, **caractérisée en ce qu'**un axe de rotation de la broche porte-pièce et un axe de rotation du disque de meulage sont orientés perpendiculairement l'un à l'autre.

4. Machine selon l'une des revendications 1 à 3, **caractérisée par** un porte-module (223, 224) présentant au moins un couplage (225) pour module d'usinage, ledit porte-module étant disposé sur le bâti de manière que le couplage puisse être positionné à l'intérieur d'un espace véritablement tridimensionnel, par rapport au dispositif porte-meule de rodage, ledit module de meulage et ledit module à broche porte-pièce pouvant se coupler au couplage du porte-module.

5. Machine selon la revendication 4, **caractérisée en ce que** l'au moins un couplage (225) pour module d'usinage (230) est doté d'un système de serrage rapide.

6. Machine selon la revendication 4 ou 5, **caractérisée en ce que** le porte-module présente plusieurs couplages pour modules d'usinage, lesdits couplages pouvant être amenés d'une position de repos à une position de travail.

7. Machine selon l'une des revendications 1 à 6, **caractérisée en ce que** le bâti entoure le dispositif porte-meule de rodage, et le dispositif porte-meule de rodage est supporté en deux points de support (21, 22) du bâti sensiblement diamétralement opposés eu égard au dispositif porte-meule de rodage en étant mobile en translation le long d'un axe horizontal passant par les points de support et en étant mobile en rotation sur cet axe.

8. Machine selon la revendication 7, **caractérisée en ce que** le bâti forme une enceinte sensiblement close délimitant un espace de travail.

9. Machine selon la revendication 8, **caractérisée en ce qu'**une partie du bâti délimitant l'espace de travail est de forme cylindrique droite, notamment cylindrique de section circulaire.

10. Machine selon l'une des revendications 7 à 9, **caractérisée par** un dispositif de support (70) sur lequel sont agencés un premier système d'entraînement (73) permettant un déplacement en translation du dispositif porte-meule de rodage le long de l'axe horizontal passant par les points de support, et un deuxième système d'entraînement (71) permettant un mouvement en rotation du dispositif porte-meule de rodage sur ce même axe, ledit dispositif de support (70) étant agencé extérieurement au bâti et étant déplaçable conjointement au dispositif porte-meule de rodage le long de l'axe horizontal.

11. Procédé de rodage de roue dentée, comprenant les étapes suivantes :
a) installation d'une ébauche de meule de rodage dans un dispositif porte-meule de rodage (60) d'une machine (100, 200, 300),
b) production d'une meule de rodage par meulage de l'ébauche de meule de rodage au moyen d'un module de meulage (130, 230, 330) de la machine,
c) mise du module de meulage dans une position de repos et positionnement d'un module à broche porte-pièce (50) de la machine dans une position de travail,
d) installation d'une ébauche de roue dentée à roder sur une broche porte-pièce (54) du module à broche porte-pièce, et
e) production d'une roue dentée par rodage de l'ébauche de roue dentée au moyen de la meule de rodage.

12. Procédé selon la revendication 11, **caractérisée en ce que**, avant ou pendant la production de la meule de rodage, un disque de meulage du module de meulage est dressé au moyen d'une unité de dressage (140, 240, 340) disposée sur la machine.
